# EUROPÄISCHE PATENTSCHRIFT

(11) **EP 3 899 501 B1**
(45) Veröffentlichungstag und Bekanntmachung des Hinweises auf die Patenterteilung: **07.06.2023**
(21) Anmeldenummer: 20706113.6
(22) Anmeldetag: 05.02.2020
(51) Int. Cl.: G01N 21/53, G01N 21/15

(54) **VORRICHTUNG ZUR STREULICHTMESSUNG VON TEILCHEN IN EINEM GAS**
DEVICE FOR THE SCATTERED LIGHT MEASUREMENT OF PARTICLES IN A GAS
DISPOSITIF DE MESURE DE LA LUMIÈRE DIFFUSÉE DE PARTICULES DANS UN GAZ

(43) Veröffentlichungstag der Anmeldung: 27.10.2021
(73) Patentinhaber: Durag GmbH, 22453 Hamburg (DE)
(72) Erfinder: CIERULLIES, Sven, 21129 Hamburg (DE); EVERTS, Birte, 22765 Hamburg (DE); MÜLLER, Bernd, 22083 Hamburg (DE)
(74) Vertreter: Eisenführ Speiser
(86) Internationale Anmeldenummer: PCT/EP2020/052845
(87) Internationale Veröffentlichungsnummer: WO 2021/155920

(56) Entgegenhaltungen:
- EP-A1- 1 798 541
- WO-A1-2014/191550

## Beschreibung

Die Erfindung betrifft eine Vorrichtung zur Streulichtmessung von Teilchen in einem Gas. Die Vorrichtung ist ausgebildet, dass Streulicht aus einem bestimmten Messvolumen, durch das ein entlang eines ersten Strahlengangs verlaufender Messstrahl hindurchtritt, detektiert wird, wobei über einen Referenzstrahl, der entlang eines zweiten Strahlenganges verläuft, welcher die gleichen optischen Grenzflächen in gleicher Art wie der Messstrahl durchtritt, eine Referenzmessung zum Beispiel für eine Verschmutzungskorrektur oder eine Korrektur von Änderungen der Intensität der Lichtquelle realisiert wird.

Die Streulichtmessung ist ein bekanntes und bewährtes Verfahren zur Bestimmung des Staubgehaltes in gasförmigen Medien. Sie wird beispielsweise zur Messung von Emissionen von Feuerungsanlagen angewendet.

Bei der Emissionsmessung wird von einer Lichtquelle aus ein Lichtstrahl in ein Messvolumen ausgesendet, welcher von den Staubpartikeln gestreut wird. Das Streulicht wird von einer Empfangsoptik gebündelt und von einem Lichtempfänger detektiert und stellt ein Maß für die Partikelkonzentration im Messvolumen dar.

Dabei ist die gemessene Leistung sehr klein im Verhältnis zur eingestrahlten Leistung.

Gleichzeitig kann, trotz schützender Maßnahmen, wie z.B. Spülluft, eine Verschmutzung der optischen Grenzflächen auftreten. Diese muss im laufenden Betrieb des Gerätes detektiert werden, um einer Beeinflussung der Messergebnisse entgegenzuwirken. Bei Geräten, die dem Stand der Technik entsprechen, geschieht dies durch einschwenkbare Streunormale oder mechanisches Umschalten von Lichtwegen. Dabei sollte das Licht der Referenzmessung für eine repräsentative Messung der Verschmutzung die gleichen optischen Grenzflächen in gleicher oder zumindest ähnlicher Richtung wie das Messlicht an möglichst den gleichen oder dicht benachbarten Stellen passieren. Ferner sollte das Licht der Referenzmessung hinsichtlich seiner Leistung einem echten Messsignal entsprechen, also typischerweise um 5 bis 6 Größenordnungen im Bezug auf die ausgesendete Lichtintensität abgedämpft werden.

Die CH 571 750 A5 beschreibt ein Verfahren zur kontinuierlichen Verschmutzungsmessung einer Oberfläche in einem Rauchmelder. Hier wird jedoch einerseits angenommen, dass die Verschmutzung der Oberfläche in gleicher Weise die Transmission wie die Reflexion beeinflusst, was bei Stäuben verschiedener Helligkeit nicht zwangsläufig der Fall ist. Zum anderen wird hier nur die Verschmutzung auf der Sendeseite, nicht jedoch auf der Empfängerseite gemessen.

Die EP 1 039 426 A2 beschreibt eine Messung der Verschmutzung durch den Anteil des von einer Grenzfläche zurückgestreuten Lichts. Auch hier kann jedoch abhängig von der Farbe der Verschmutzung der Zusammenhang zwischen Transmission und Reflexion nicht sichergestellt werden.

Die EP 0 615 218 A1 beschreibt ein Verfahren zur Messung des Feuchteniederschlags. Hierbei wird jedoch nur der Beschlag auf der Empfangsoptik durch eine separate Quelle gemessen.

Die EP 1 798 541 A1 beschreibt ein Streulicht-Sichtweitenmessgerät mit integrierter Funktionsprüfungs- und Korrektureinheit mit einem Lichtsender zum Aussenden von einem Sendelichtbündel in einen Messbereich und einem Lichtempfänger mit einem Empfangslichtbündel zum Empfang von Streulicht aus dem Messbereich, wobei sich das Sendelichtbündel und das Empfangslichtbündel im Messbereich kreuzförmig überschneiden.

Davon ausgehend liegt der Erfindung die Aufgabe zugrunde, eine Streulichtmessung mit Referenzmessung zu realisieren, bei der das Licht des Referenzwegs dieselben optischen Elemente wie das Licht des Messwegs in gleicher oder ähnlicher Richtung durchstrahlt, das Licht auf dem Referenzweg aus der gleichen Lichtquelle wie das Licht des Messwegs stammt, jedoch hinsichtlich seiner Leistung abgeschwächt wird, und keine Stör- und verschleißanfälligen mechanischen beweglichen Elemente benötigt werden.

Die Aufgabe wird durch eine Vorrichtung zur Streulichtmessung gemäß Anspruch 1 gelöst. Vorteilhafte Ausführungsarten der Erfindung sind in Unteransprüchen angegeben.

Die erfindungsgemäße Vorrichtung zur Streulichtmessung von Teilchen in einem Gas umfasst eine Lichtquelle, einen Strahlteiler, der einen von der Lichtquelle ausgesendeten Lichtstrahl in einen Messstrahl und in einen Referenzstrahl aufteilt, eine in einem Abstand von dem Strahlteiler angeordnete Lichtempfangsvorrichtung, die mindestens eine im Referenzstrahl angeordnete Linse mit spitzwinklig auf den Messstrahl ausgerichteter optischen Achse, einen ersten Lichtempfänger auf der von dem Strahlteiler abgewandten Seite der Linse zum Empfangen des von diesem abgebildeten Streulichtes aus einem Messvolumen in einem gasführenden Bereich zwischen Strahlteiler und Linse und einen zweiten Lichtempfänger auf der von dem Strahlteiler abgewandten Seite der Linse zum Empfangen des von dieser abgebildeten Referenzstrahles aufweist.

Dadurch, dass die erfindungsgemäße Vorrichtung einen ersten Lichtempfänger für das Streulicht und einen zweiten Lichtempfänger für das Referenzlicht aufweist, ist kein mechanisches Umschalten des Messstrahls und des Referenzstrahls erforderlich, um diese getrennt voneinander mittels desselben Lichtempfängers zu messen. Störungen und Verschleiß durch mechanisch bewegliche Elemente werden folglich vermieden..

Dadurch, dass die Vorrichtung einen ersten Lichtempfänger für das Streulicht und einen zweiten Lichtempfänger für den Referenzstrahl aufweist, kann die Messung von Streulicht und Referenzlicht gleichzeitig erfolgen. Grundsätzlich wird hierdurch die Qualität der Messung verbessert. Die Messung kann aber auch zeitlich zueinander versetzt erfolgen, wie bei dem Stand der Technik, bei dem Messstrahl und Referenzstrahl umgeschaltet werden.

Gemäß einer Ausführungsart der Erfindung ist der Strahlteiler ein Prisma.

Dadurch, dass das Licht durch einen Strahlteiler in einen Messstrahl und in einen Referenzstrahl aufgeteilt wird, kann eine Abschwächung des Referenzstrahls im Vergleich zum Messstrahl erfolgen. Gemäß einer weiteren Ausführungsart ist im Referenzstrahl ein lichtabschwächendes Element angeordnet. Durch das lichtabschwächende Element kann eine Abschwächung der Leistung des Referenzstrahls im Vergleich zum Messstrahl um 5 bis 6 Größenordnungen erreicht werden, wodurch die Leistung des Referenzstrahles besser an das Streulicht angepasst wird.

Gemäß einer weiteren Ausführungsart ist das lichtabschwächende Element ein Filter. Der Filter ist vorzugsweise auf oder vor einer Abschlussscheibe zu einem gasförmigen Bereich angeordnet.

Gemäß einer weiteren Ausführungsart ist das lichtabschwächende Element eine Beschichtung auf einer Abschlussscheibe für den gasführenden Bereich. Gemäß einer weiteren Ausführungsart ist die Beschichtung auf der vom gasführenden Bereich abgewandten Innenseite der Abschlussscheibe angeordnet, um bei einer Reinigung der Scheibe ein Zerkratzen der Beschichtung zu vermeiden.

Gemäß einer weiteren Ausführungsart weist die Lichtempfangsvorrichtung im Strahlengang des Messstrahles eine Lichtfalle auf. Durch die Lichtfalle wird der

Anteil des Messlichtes aufgefangen, der nicht als Streulicht aus dem gasführenden Bereich austritt.

Gemäß einer weiteren Ausführungsart ist der erste Lichtempfänger ein erstes lichtempfindliches Element und/oder ist der zweite Lichtempfänger ein zweites lichtempfindliches Element. Das erste lichtempfindliche Element und/oder das zweite lichtempfindliche Element ist beispielsweise eine Fotodiode und/oder ein Fototransistor. Gemäß einer anderen Ausführungsart ist der erste Lichtempfänger das eine Ende eines ersten Lichtleiters und ist der zweite Lichtempfänger das eine Ende eines zweiten Lichtleiters und ist das andere Ende des ersten Lichtleiters mit einem ersten lichtempfindlichen Element gekoppelt und ist das andere Ende des zweiten Lichtleiters mit einem zweiten lichtempfindlichen Element gekoppelt. Über die ersten Lichtleiter und/oder die zweiten Lichtleiter kann das empfangene Licht an erste und/oder zweite lichtempfindliche Elemente angeordnet werden, die in einem Abstand von dem gasführenden Bereich angeordnet sind, z.B. in einem Gerätegehäuse, in dem die Elektronik der Vorrichtung angeordnet ist.

Gemäß einer weiteren Ausführungsart wird das Messgas über eine Zuleitung zur Vorrichtung geleitet.

Gemäß einer weiteren Ausführungsart ist die Zuleitung mit einem Entnahmesystem verbunden, das zur Entnahme des Messgases aus einem Kamin, einem anderen gasführenden System oder der Umgebung dient. Bei dieser Ausführungsart ist die Vorrichtung als Messzelle ausgebildet, welche die in Anspruch 1 und gegebenenfalls den Unteransprüchen angegebenen Elemente umfasst.

Gemäß einer weiteren Ausführungsart wird dieses Messgas beheizt, um kondensierte Partikel zu verdampfen, welche ein fehlerhaftes Streulichtsignal hervorrufen würden.

Gemäß einer weiteren Ausführungsart wird in diese Vorrichtung Spülluft über speziell angeordnete Öffnungen eingebracht, welche eine Verschmutzung der optischen Grenzflächen verhindert. Ferner kann durch die Spülluft eine Überhitzung der optischen und elektrischen Bauteile vermieden werden.

Die Erfindung wird nachfolgend anhand der anliegenden Zeichnungen näher erläutert, die ein Ausführungsbeispiel in einem grob schematischen Längsschnitt zeigt.

Aus einer Lichtquelle 1 wird ein Lichtstrahl 2 ausgesendet, von dem der größte Teil durch einen Strahlteiler 3 und eine Abschlussscheibe 4 in einen gasführenden Bereich hindurchtritt, in dem sich das zu messende Gas befindet bzw. durch den das zu messende Gas hindurchströmt. Das durch den Strahlteiler 3 transmittierte Licht bildet einen Messstrahl 2.1, der auf Staubpartikel 5 in einem Messvolumen 5.1 im gasführenden Bereich trifft und Streulicht 6 erzeugt, welches durch eine Linse 7 auf einen ersten Lichtempfänger 8 abgebildet wird. Der nicht gestreute Anteil des Messstrahls 2.1 wird in einer Lichtfalle 9 absorbiert.

In dem Strahlteiler 3 wird ein Teil des Lichtstrahls 2 als Referenzstrahl 10 abgespalten und tritt nach dem Durchgang durch ein lichtabschwächende Element 11 durch die gleiche Abschlussscheibe 4 und die gleiche Linse 7 wie das Streulicht 6, trifft jedoch auf einen separaten zweiten Lichtempfänger 12. Der erste Lichtempfänger 8 ist ein erstes lichtempfindliches Element. Der zweite Lichtempfänger 12 ist ein zweites lichtempfindliches Element. Anstatt einer einzigen Linse 7 können auch mehrere Linsen vorhanden sein. Ferner kann anstatt der Linse 7 ein Objektiv vorhanden sein, welches eine oder mehrere Linsen umfasst. Die Bauteile 7, 8, 9, 12 sind Bestandteile einer Lichtempfangsvorrichtung 13.

Die Lichtquelle 1 ist beispielsweise ein Laser oder eine LED.

Mit dieser Vorrichtung können gleichzeitig ein dem Staubgehalt im Messgas proportionales Streulichtsignal und ein Referenzsignal in der gleichen leistungsmäßigen Größenordnung gemessen werden. Die notwendige Abschwächung des Referenzsignals erfolgt dabei durch den Strahlteiler 3 mit einer geringen Auskopplung und durch das lichtabschwächende Element 11. Bei dem lichtabschwächenden Element 11 handelt es sich um eine Beschichtung auf oder vor der Abschlussscheibe 4.

Besonders einfach und vorteilhaft kann als Strahlteiler 3 ein Prisma verwendet werden. Wie dem Fachmann bekannt ist, werden an einem Übergang Luft-Glas bei senkrechtem Einfall etwa 4 % des Lichts reflektiert, sodass der ausgekoppelte Anteil des Lichts nach zwei Reflexionen in etwa 0,16 % des Anteils des transmittierten Lichts ausmacht. Damit muss das lichtabschwächende Element 11 zum Erreichen von sechs Größenordnungen der Abschwächung nur noch 0,1 % Transmission aufweisen. Solche Beschichtungen entsprechen dem Stand der Technik und sind weithin verfügbar.

### Bezugszeichenliste

- 1: Lichtquelle
- 2: Lichtstrahl
- 2.1: Messstrahl
- 3: Strahlteiler
- 4: Abschlussscheibe
- 5: Staubpartikel
- 5.1: Messvolumen
- 6: Streulicht
- 7: Linse
- 8: Lichtempfänger
- 9: Lichtfalle
- 10: Referenzstrahl
- 11: lichtabschwächendes Element
- 12: zweiter Lichtempfänger
- 13: Lichtempfangsvorrichtung

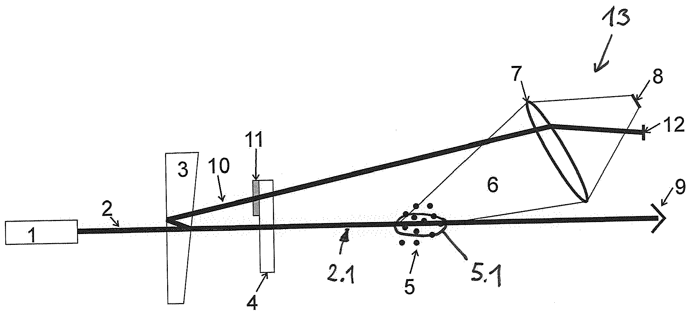

## Patentansprüche

1. Vorrichtung zur Streulichtmessung von Teilchen in einem Gas umfassend eine Lichtquelle (1), einen Strahlteiler (3), der einen von der Lichtquelle (1) ausgesendeten Lichtstrahl (2) in einen Messstrahl (2.1) und in einen Referenzstrahl (10) aufteilt, eine in einem Abstand von dem Strahlteiler (3) angeordnete Lichtempfangsvorrichtung (13), die mindestens eine im Referenzstrahl (10) angeordnete Linse (7) mit spitzwinklig auf den Messstrahl ausgerichteter optischer Achse, einen ersten Lichtempfänger (8) auf der von dem Strahlteiler (3) abgewandten Seite der Linse (7) zum Empfangen des von dieser abgebildeten Streulichtes aus einem Messvolumen (5.1) in einen gasführenden Bereich zwischen Strahlteiler (3) und Linse (7) und einen zweiten Lichtempfänger (12) auf der von dem Strahlteiler (3) abgewandten Seite der Linse (7) zum Empfangen des von dieser abgebildeten Referenzstrahles (10) aufweist.

2. Vorrichtung nach Anspruch 1, bei der der Strahlteiler (3) ein Prisma ist.

3. Vorrichtung nach Anspruch 1 oder 2, bei der im Referenzstrahl (10) ein lichtabschwächendes Element (11) angeordnet ist.

4. Vorrichtung nach einem der Ansprüche 1 bis 3, bei der das lichtabschwächende Element (11) ein Filter ist.

5. Vorrichtung nach Anspruch 3 oder 4, bei der das lichtabschwächende Element (11) eine Beschichtung auf einer Abschlussscheibe (4) für den gasführenden Bereich ist.

6. Vorrichtung nach Anspruch 5, bei der die Beschichtung auf der vom gasführenden Bereich abgewandten Innenseite der Abschlussscheibe (4) angeordnet ist.

7. Vorrichtung nach einem der Ansprüche 1 bis 6, bei der die Lichtempfangsvorrichtung (13) im Strahlengang des Messstrahles (2.1) eine Lichtfalle (9) aufweist.

8. Vorrichtung nach einem der Ansprüche 1 bis 7, bei der der erste Lichtempfänger (8) ein erstes lichtempfindliches Element und/oder bei der der zweite Lichtempfänger (12) ein zweites lichtempfindliches Element ist.

9. Vorrichtung nach einem der Ansprüche 1 bis 8, bei der der zweite Lichtempfänger (12) in einem Abstand von dem ersten Lichtempfänger (8) angeordnet ist.

10. Vorrichtung nach einem der Ansprüche 1 bis 9, umfassend eine Messzelle mit mit den Elementen (1) bis (12), wobei das Messgas zu dieser Messzelle hingeleitet wird und in dieser durch das Messvolumen (5.1) geleitet wird.

11. Vorrichtung nach Anspruch 10, wobei das Messgas beheizt ist.

12. Vorrichtung nach Anspruch 10 oder 11, wobei Spülluft durch eine Anordnung von Öffnungen hindurchgeführt ist.

## Claims

1. A device for the light-scattering measurement of particles in a gas comprising a light source (1), a beam splitter (3), which splits a light beam (2) emitted from the light source (1) into a measurement beam (2.1) and into a reference beam (10), a light receiving device (13) arranged at a distance from the beam splitter (3), which comprises at least one lens (7) arranged in the reference beam (10) with an optical axis orientated at an acute angle to the measurement beam, a first light receiver (8) on the side of the lens (7) facing away from the beam splitter (3) for receiving the scattered light imaged by the latter from a measurement volume (5.1) in a gas-bearing region between the beam splitter (3) and the lens (7) and a second light receiver (12) on the side of the lens (7) facing away from the beam splitter (3) for receiving the reference beam (10) imaged by the latter.

2. The device according to claim 1, wherein the beam splitter (3) is a prism.

3. The device according to claim 1 or 2, wherein a light-attenuating element (11) is arranged in the reference beam (10).

4. The device according to any one of claims 1 to 3, wherein the light-attenuating element (11) is a filter.

5. The device according to claim 3 or 4, wherein the light-attenuating element (11) is a coating on a cover lens (4) for the gas-bearing region.

6. The device according to claim 5, wherein the coating is arranged on the inner side of the cover lens (4) facing away from the gas-bearing region.

7. The device according to any one of claims 1 to 6, wherein the light receiving device (13) comprises a light trap (9) in the beam path of the measurement beam (2.1) .

8. The device according to any one of claims 1 to 7, wherein the first light receiver (8) is a first light-sensitive element and/or wherein the second light receiver (12) is a second light-sensitive element.

9. The device according to any one of claims 1 to 8, wherein the second light receiver (12) is arranged at a distance from the first light receiver (8).

10. The device according to any one of claims 1 to 9, comprising a measuring cell with the elements (1) to (12), wherein the measurement gas is passed to this measuring cell and is conducted in the latter through the measurement volume (5.1).

11. The device according to claim 10, wherein the measurement gas is heated.

12. The device according to claim 10 or 11, wherein scavenging air is conveyed through an arrangement of openings.

## Revendications

1. Dispositif, destiné à mesurer de la lumière diffusée par des particules dans un gaz, comprenant une source lumineuse (1), un séparateur de faisceau (3), qui divise un faisceau lumineux (2) émis par la source lumineuse (1) en un faisceau de mesure (2.1) et en un faisceau de référence (10), un dispositif récepteur de lumière (13), placé avec un écart par rapport au séparateur de faisceau (3), qui comporte au moins une lentille (7) placée dans le faisceau de référence (10) avec un axe optique à angle aigu orienté sur le faisceau de mesure, un premier récepteur de lumière (8) sur le côté de la lentille (7) qui est opposé au séparateur de faisceau (3), destiné à réceptionner la lumière diffuse reproduite par celle-ci à partir d'un volume de mesure (5.1) dans une zone conductrice de gaz entre le séparateur de faisceau (3) et la lentille (7) et un deuxième récepteur de lumière (12) sur le côté de la lentille (7) qui est opposé au séparateur de faisceau (3), destiné à réceptionner le faisceau de référence (10) reproduit par celle-ci.

2. Dispositif selon la revendication 1, sur lequel le séparateur de faisceau (3) est un prisme.

3. Dispositif selon la revendication 1 ou 2, sur lequel dans le faisceau de référence (10) est placé un élément (11) atténuateur de lumière.

4. Dispositif selon l'une quelconque des revendications 1 à 3, sur lequel l'élément (11) atténuateur de lumière est un filtre.

5. Dispositif selon la revendication 3 ou 4, sur lequel l'élément (11) atténuateur de lumière est un revêtement sur une vitre de terminaison (4) pour la zone conductrice de gaz.

6. Dispositif selon la revendication 5, sur lequel le revêtement est placé sur la face intérieure de la vitre de terminaison (4) qui est opposée à la zone conductrice de gaz.

7. Dispositif selon l'une quelconque des revendications 1 à 6, sur lequel le dispositif récepteur de lumière (13) comporte dans la trajectoire du faisceau de mesure (2.1) un piège à lumière (9).

8. Dispositif selon l'une quelconque des revendications 1 à 7, sur lequel le premier récepteur de lumière (8) est un premier élément photosensible et / ou sur lequel le deuxième récepteur de lumière (12) est un deuxième élément photosensible.

9. Dispositif selon l'une quelconque des revendications 1 à 8, sur lequel le deuxième récepteur de lumière (12) est placé avec un écart par rapport au premier récepteur de lumière (8).

10. Dispositif selon l'une quelconque des revendications 1 à 9, comprenant une cellule de mesure avec les éléments (1) à (12), le gaz de mesure étant dirigé vers ladite cellule de mesure et dans celle-ci, étant dirigé à travers le volume de mesure (5.1).

11. Dispositif selon la revendication 10, le gaz de mesure étant chauffé.

12. Dispositif selon la revendication 10 ou 11, de l'air de rinçage étant dirigé à travers un agencement d'ouvertures.
